# FASCICULE DE BREVET EUROPEEN

(11) **EP 3 622 136 B1**
(45) Date de publication et mention de la délivrance du brevet: **10.03.2021**
(21) Numéro de dépôt: 18727859.3
(22) Date de dépôt: 04.05.2018
(51) Int. Cl.: D03D 5/00, D03D 15/00, G02B 5/02, B63B 17/02, E04H 15/54, E04H 15/10, D03D 1/00, G02B 6/00

(54) **ARTICLE DE COUVERTURE FLEXIBLE**
FLEXIBLER ABDECKARTIKEL
FLEXIBLE COVERING ITEM

(30) Priorité: 11.05.2017 FR 1754144
(43) Date de publication de la demande: 18.03.2020
(73) Titulaire: GUARDTEX, 56370 SARZEAU (FR)
(72) Inventeur: PLAGUE, Thierry, 56370 Sarzeau (FR)
(74) Mandataire: Loyer & Abello
(86) Numéro de dépôt international: PCT/FR2018/051139
(87) Numéro de publication internationale: WO 2018/206892

(56) Documents cités:
- WO-A2-2008/087339
- AT-A1- 502 591
- US-A1- 2006 087 832
- US-B1- 6 382 825

## Description

### Domaine technique

La présente invention concerne le domaine des articles de couverture flexibles pour usage en plein air, plus particulièrement des articles de couverture éclairants à fibres optiques diffusantes.

L'invention concerne entre autres des articles de couvertures utilisés comme toit pour protéger des usagers du soleil et/ou des intempéries, par exemple des articles tels que capotes, biminis, tauds de soleil, notamment pour usage sur un véhicule marin.

### Arrière-plan technologique

Dans l'état de la technique, il est connu des systèmes d'éclairage à fibres optiques diffusantes intégrés à une toile de tente.

US6382825 divulgue une toile de tente pour extérieur, dans laquelle un groupe de fibres optiques diffusantes est maintenu contre la toile de tente par un drap transparent cousu à la toile de tente.

US2006087832 concerne un dispositif textile d'éclairage. Le dispositif textile d'éclairage a une couche de motif et une couche de tissu optique. La couche de motif a une zone transparente et une zone non transparente. La couche de tissu optique est tissée à partir de fibres optiques et de fils pour fournir la source de lumière. La couche de tissu optique est fixée à la couche de motif par couture ou par un composant de fixation.

AT502591 concerne un procédé de production de surfaces textiles et de surfaces textiles comprenant des fils fonctionnels qui comportent des cordons d'électroluminescence, des fils de diodes électroluminescentes organiques et des fils de diodes électroluminescentes polymères,

### Résumé

L'invention vise à proposer un article de couverture flexible intégrant une nappe éclairante à fibres optiques diffusantes.

Pour ce faire, selon un mode de réalisation, l'invention fournit un article de couverture flexible pour usage en plein air comportant :
une nappe textile couvrante, et
une nappe éclairante tissée comportant des fibres optiques diffusantes et des fils de liage tissés avec les fibres optiques diffusantes, la nappe éclairante comportant en outre une bordure composées de fils textiles tissés, la bordure étant disposée sur le pourtour de la nappe éclairante tissée, les fibres optiques diffusantes dépassant d'un bord de la nappe éclairante tissée, une portion d'extrémité des fibres optiques diffusantes étant réunie en un toron,
une couture d'assemblage, la nappe éclairante tissée étant fixée sur la nappe textile couvrante par la couture d'assemblage sur la bordure, les deux nappes étant tendues,
un boitier d'éclairage, le boitier d'éclairage comportant une sortie optique, la sortie optique étant connectée au toron de fibres optiques diffusantes, et une source lumineuse pour générer un flux lumineux dans la sortie optique.

Grâce à ces caractéristiques, la cohésion des fibres optiques diffusantes entre elles est améliorée lors des manipulations de l'article de couverture flexible, par exemple des pliages, dépliage, enroulages ou déroulages.

Grâce à ces caractéristiques, la résistance de l'article de couverture flexible est améliorée contre les contraintes mécaniques et la lacération.

Selon d'autres modes de réalisation avantageux, un tel article de couverture éclairante peut présenter une ou plusieurs des caractéristiques suivantes.

Des sources lumineuses de différentes couleurs peuvent être utilisées selon l'application envisagées. Par exemple, différentes couleurs peuvent être utilisées pour ne pas perturber la vision lors de navigations nocturnes et/ou à des fins de signalisation, et/ou de communication.

Dans un mode de réalisation, la source lumineuse est une Diode Electroluminescente (LED) et le boitier d'éclairage comporte en outre une lentille apte à focaliser la lumière émise dans par la LED dans l'extrémité des fibres optiques diffusantes.

Dans un mode de réalisation, le plan de focalisation, le boitier d'éclairage comporte en outre un connecteur électrique apte à recevoir de l'électricité et à alimenter la LED.

Dans un mode de réalisation, le boitier d'éclairage est en outre apte à être raccordé à un radiateur. Grâce à ces caractéristiques, la chaleur de la LED peut être dispersée.

Dans un mode de réalisation, le boitier est étanche.

Dans un mode de réalisation, les fibres optiques diffusantes sont parallèles entre elles, de sorte que la nappe éclairante tissée est sensiblement plate. Grâce à ces caractéristiques la flexibilité d'un article de couverture flexible est améliorée car les fibres optiques diffusantes sont sensiblement dans une même épaisseur.

Dans un mode de réalisation, les fils de liage sont en polyester.

Dans un mode de réalisation, les fils de liage sont tissés à angle droit par rapport à fibres optiques diffusantes, de sorte à former un tissage de type chaîne et trame.

Dans un mode de réalisation, la couture d'assemblage est soudée, par exemple par soudage à froid. Grâce à ces caractéristiques, la nappe textile couvrante est imperméable même au niveau de la couture d'assemblage.

Dans un mode de réalisation, l'épaisseur de la bordure est sensiblement 0.2mm.

Dans un mode de réalisation, la largeur de la bordure est sensiblement 20mm. Grâce à ces caractéristiques, l'extrémité des fibres optiques diffusantes n'est pas endommagée lors de la réalisation de la couture d'assemblage.

Dans un mode de réalisation, l'épaisseur de la nappe textile couvrante est sensiblement 0.8mm.

Dans un mode de réalisation, le diamètre de la fibre optique est sensiblement 0.5mm. Ce diamètre est celui relevé autour de la gaine.

Dans un mode de réalisation, les dimensions peuvent être relevées par exemple au pied à coulisse.

Dans un mode de réalisation, l'article de couverture flexible comporte en outre un manchon, le toron étant assemblé dans le manchon à l'extrémité du toron, le manchon étant apte à recevoir le flux lumineux généré dans la sortie optique sur l'extrémité des fibres optiques diffusantes.

Dans un mode de réalisation, le manchon est de forme sensiblement cylindrique. Dans un mode de réalisation, le manchon est réalisé en aluminium.

Dans un mode de réalisation, la source lumineuse est une Diode Electroluminescente (LED) et le boitier d'éclairage comporte en outre une lentille apte à focaliser la lumière émise dans par la LED sur l'extrémité des fibres optiques diffusantes.

Dans un mode de réalisation, le plan de focalisation, le boitier d'éclairage comporte en outre un connecteur électrique apte à recevoir de l'électricité et à alimenter la LED.

Dans un mode de réalisation, la nappe textile couvrante est enduite sur une face de sorte à être imperméable, la nappe éclairante tissée étant cousue sur l'autre face.

Dans un mode de réalisation, l'enduit comporte une résine imperméable. Dans un mode de réalisation, l'enduit a des propriétés antifongiques.

Dans un mode de réalisation, la nappe textile comporte des fibres en acrylique. Dans un mode de réalisation, la nappe textile couvrante est composée à 100% en acrylique, son armure est de type toile, la nappe textile couvrante pesant 320g/m². Les fils de chaine présentant une résistance à la rupture de 140 décanewtons (daN), une résistance à la déchirure de 3 à 3.3 daN, par exemple 3.3daN et un allongement à la rupture de 30% à 34%, par exemple 30%. Les fils de trame présentant une résistance à la rupture de 90 à 130 daN, par exemple 130daN, une résistance à la déchirure de 2.5 daN et un allongement à la rupture de 15% à 30%, par exemple 15%. L'imperméabilité mesurée par le test de Schmerber est de 400 à 1000mm, par exemple 1000mm. La perméabilité à l'air est de 2.5 l/m²/s à 31.62 l/m²/s, par exemple 2.5 l/m²/s. Les valeurs numériques renseignées ci-dessus peuvent varier de 10%. Par exemple, une telle nappe textile couvrante est commercialisée par le groupe DICKSON-GLEN RAVEN, sous la marque SUNBRELLA Plus.

Dans un mode de réalisation, la nappe textile couvrante est opaque.

Dans un mode de réalisation, la nappe textile comporte des fils textiles résistants aux UVs.

Dans un mode de réalisation, les fils de liage sont en outre résistants aux UVs.

Grâce à ces caractéristiques, la nappe éclairante tissée est protégée contre l'agression des UVs réverbérés sur l'eau ou la neige et entrant dans l'habitacle formé par l'article de couverture flexible.

Dans un mode de réalisation, le connecteur électrique est apte à recevoir une puissance électrique de 5W.

Dans un mode de réalisation, l'article de couverture flexible est une toile de capote éclairante qui comporte en outre des fourreaux formés le long des bords de la nappe textile couvrante, les fourreaux étant aptes à recevoir des arceaux afin que l'article de couverture flexible forme un habitacle, par exemple pour un voilier de plaisance.

Dans un mode de réalisation, le boitier d'éclairage est disposé dans un des fourreaux.

Dans un mode de réalisation, un pelliculage est collé ou soudé sur la nappe éclairante tissée du côté opposé à la nappe textile couvrante. Grâce à ces caractéristiques, les fibres optiques diffusantes sont protégées des agressions mécaniques du côté de l'intérieur de l'habitacle.

Dans un mode de réalisation, la nappe textile couvrante est une première nappe textile couvrante, l'article de couverture flexible comportant en outre une seconde nappe textile couvrante disposée par-dessus.

Dans un mode de réalisation, la première et la seconde nappe textile couvrante sont cousues l'une à l'autre sur leurs bordures, de sorte à ce que l'ensemble formé par les deux nappes textiles couvrantes soit plat.

Dans un mode de réalisation, la première nappe textile présente un évidement de même dimension que la nappe éclairante tissée et les bords de cet évidement sont cousus avec les bordures de la nappe éclairante tissée sur la première nappe textile.

Dans un mode de réalisation, la seconde nappe textile est imperméable. Grâce à ces caractéristiques, l'imperméabilité de l'article de couverture flexible est améliorée.

Dans un mode de réalisation, l'article de couverture flexible comporte en outre une portion de toile cousue sur la nappe textile couvrante autour de l'extrémité des fibres optiques diffusantes réunies en toron, afin que le toron soit disposé entre la portion de toile et la nappe textile couvrante. Grâce à ces caractéristiques, l'extrémité des fibres optiques diffusantes réunies en toron est protégée des agressions mécaniques.

L'invention fournit également une capote destinée à un usage sur un véhicule marin, comportant l'article de couverture flexible décrit ci-dessus et des arceaux disposés au moins en partie dans les fourreaux de l'article de couverture flexible, de sorte que l'article de couverture flexible est tendu sur les arceaux, les arceaux étant aptes à être fixés sur le véhicule marin. Les arceaux peuvent être réalisés sous la forme d'une structure rigide, pliable, démontable ou gonflable. De tels arceaux peuvent être réalisés dans différentes matières, par exemple acier inoxydable, aluminium, matières composites, etc.

### Brève description des figures

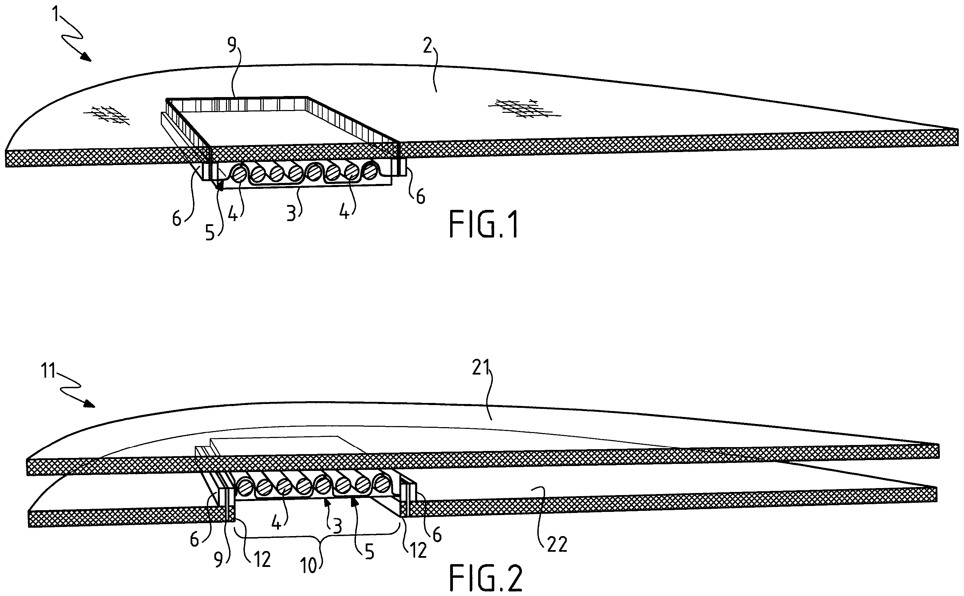

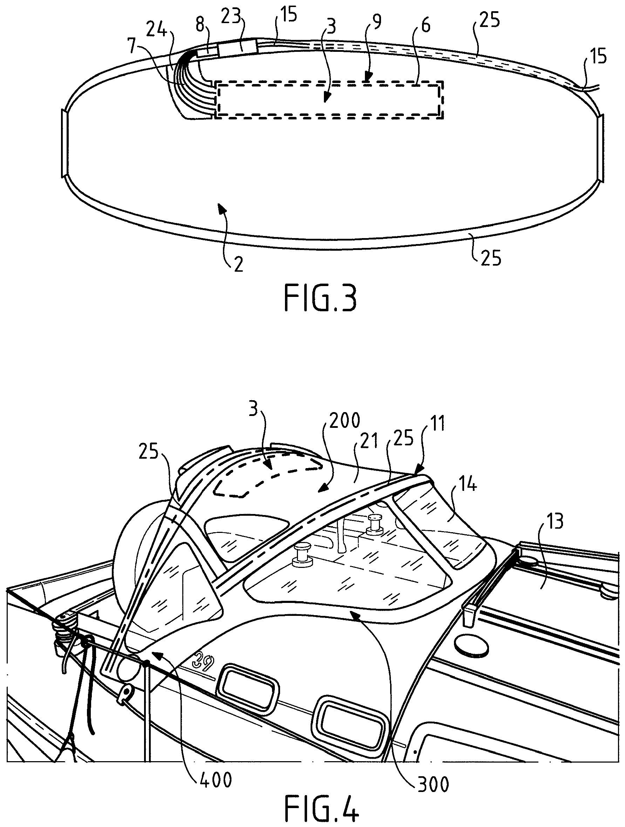

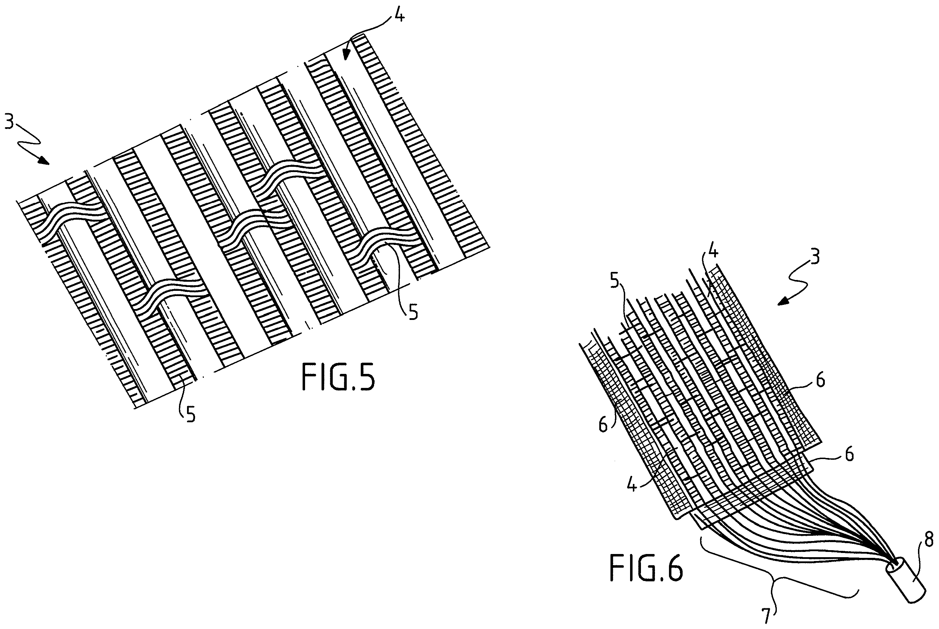

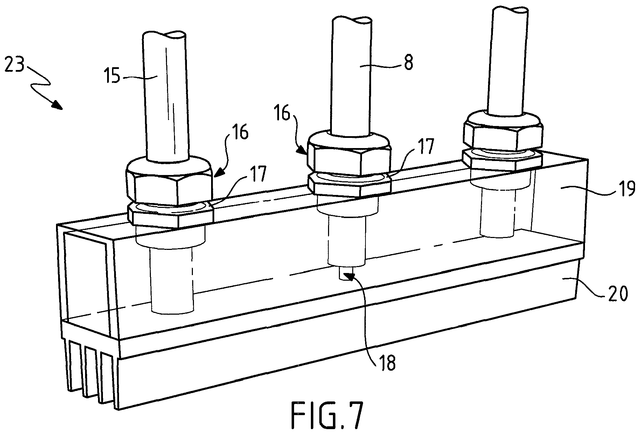

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue partielle en coupe d'une capote éclairante selon un premier mode de réalisation,
- **La** **figure 2** est une vue partielle éclatée en coupe d'une capote éclairante selon un second mode de réalisation,
- **La** **figure 3** est vue de dessus d'une portion de toit de la capote éclairante de la figure 4,
- **La** **figure 4** est une illustration d'un bateau de plaisance sur lequel est installé une capote éclairante,
- **La** **figure 5** est un schéma d'une portion de nappe éclairante tissée pouvant être utilisée dans une capote éclairante telle celle de la figure 1 ou de la figure 2,
- **La** **figure 6** est un schéma d'une nappe éclairante tissée dont les fibres optiques diffusantes sont réunies en toron,
- **La** **figure 7** est un schéma d'un boitier étanche pour l'alimentation optique de la nappe éclairante tissée.

### Description détaillée de modes de réalisation

Les figures 1 et 2, représentent une capote éclairante 1, 11 selon deux mode de réalisation. Dans les deux modes de réalisation, la capote éclairante 1 comporte une nappe éclairante tissée 3.

La nappe éclairante tissée 3 est plate et de forme rectangulaire.

La capote éclairante 1, 11 et la nappe éclairante tissée 3 sont flexibles.

La figure 1 représente un premier mode de réalisation dans lequel la capote éclairante 1 comporte une nappe textile couvrante 2 unique sur laquelle est cousue la nappe éclairante tissée 3.

La nappe éclairante tissée 3 comporte des fibres optiques diffusantes 4. Les fibres optiques diffusantes 4 sont des fils de plastique recouverts d'une gaine en plastique d'indice optique différent permettant de conduire la lumière qui y est introduite par des réflexions internes sur l'interface entre la gaine et le fil de plastique. La gaine est diffusante, par exemple en présentant des évidements périodiques, afin que la lumière puisse se diffuser radialement tout au long de la fibre optique diffusante 4. Les fibres optiques diffusantes sont sélectionnées pour diffuser de la lumière dans le domaine visible.

La figure 5 illustre plus en détail une forme de tissage utilisable dans la nappe éclairante tissée 3.

Les fibres optiques diffusantes 4 sont parallèles entre elles. Les fibres optiques diffusantes 4 ne se superposent pas les unes sur les autres dans la nappe éclairante tissée 3. Ainsi, l'ensemble des fibres optiques diffusantes 4 forme une nappe plane flexible de forme rectangulaire. Notamment, une largeur de la nappe éclairante tissée 3 correspond à une première extrémité des fibres optiques diffusantes 4, les deux longueurs de la nappe éclairante tissée 3 correspondent au contour le long de la première, respectivement la dernière fibre optique diffusante 4 de la nappe éclairante tissée 3. La dernière largeur de la nappe éclairante tissée 3 correspond à une seconde extrémité des fibres optiques diffusantes 4, cette seconde extrémité étant libre et non tissée.

La nappe éclairante tissée 3 comporte en outre des fils de liage 5. Les fibres optiques diffusantes 4 sont tissées entre elles par l'intermédiaire des fils de liage 5, par exemple par tissage de type jacquard. Les fils de liage 5 peuvent être des fils de coton ou des fils synthétiques. Les fils de liage 5 ont pour fonction le maintien des fibres optiques diffusantes 4 parallèles les unes aux autres de sorte à former la nappe plane textile. De préférence, les fils de liage 5 sont en polyester traité afin d'être résistants aux rayons ultra-violet (UV).

La figure 6 illustre plus en détail un mode de réalisation de la nappe éclairante tissée 3.

Les bords de la nappe éclairante tissée 3 sont des bordures 6 tissées uniquement avec des fils de liage 5, et ne comportant pas de fibres optiques diffusantes 4 afin d'être aptes à être cousues sans risquer de sectionner une fibre optique diffusante 4. Les bordures 6 sont tissées sur chaque largeur et chaque longueur de la forme rectangulaire de la nappe éclairante tissée 3.

Notamment, au niveau de la largeur correspondant à la seconde extrémité des fibres optiques diffusantes 4, la bordure 6 et les fibres optiques diffusantes 4 non tissées sont sur deux épaisseurs distinctes. L'une des deux épaisseurs est celle des fibres optiques diffusantes 4 non tissées sortant de la nappe éclairante tissée 3. L'autre est celle de la bordure 6. Ainsi, les deux épaisseurs distinctes peuvent être éloignées l'une de l'autre pendant qu'une couture d'assemblage 9 est réalisée sur la bordure 6. Comme représenté, les secondes extrémités des fibres optiques diffusantes 4 qui sont libres au niveau de la largeur correspondant à la seconde extrémité des fibres optiques diffusantes 4 sont réunies en un toron 7 de fibres optiques diffusantes 4. Le toron 7 est maintenu par un manchon 8. Le manchon 8 est un cylindre ouvert en ses deux extrémités et présentant un diamètre adapté à maintenir le toron 7. La seconde extrémité des fibres optiques diffusantes 4 est organisée autour d'un plan radial du manchon 8.

Le manchon 8 est agencé sur un boitier d'éclairage 23 comportant notamment une source lumineuse, et alimenté par un câble d'alimentation électrique 15, comme décrit ultérieurement en référence à la figure7.

La figure 3 représente une portion de toit 200 de la capote éclairante 1, lorsque cette portion est disposée à plat avant l'assemblage de la capote éclairante 1.

Comme représenté sur la figure 3, la nappe éclairante tissée 3 est fixée à la nappe textile couvrante 2 par une couture d'assemblage 9 réalisée sur les bordures 6. La nappe éclairante tissée 3 est cousue tendue sur la nappe textile couvrante 2 de sorte à ce que l'ensemble formé par les deux nappes soit plat et flexible.

La capote éclairant 1 comporte en outre des fourreaux 25 aptes à recevoir des arceaux, par exemple des arceaux métalliques, adaptés à mettre en forme la capote éclairante 1 flexible afin de former un habitacle ou un toit.

Les fourreaux 25 sont par exemple réalisés en formant des ourlets ouverts par couture des bords de la nappe textile couvrante 2. Les fourreaux 25 sont également réalisables sous la forme de conduits de tissus ouvrables dont les bords sont munis de fermetures éclairs ou de boutons pressions ou de bandes auto-agrippantes (de type velcro) afin de faciliter le montage et le démontage de la capote éclairante 1 sur les arceaux.

Optionnellement, le manchon 8 est disposé dans un fourreau 25 et l'alimentation électrique est un câble d'alimentation électrique 15 qui sort du fourreau 25, tel que représenté sur la figure 3. Ainsi, l'alimentation électrique est facile d'accès pour être branchée et contrôlée. Alternativement, l'alimentation électrique peut être autonome, par exemple une l'alimentation électrique peut être une batterie. La batterie peut être accessible ou non.

Dans le premier mode de réalisation représenté en référence aux figures 1 et 3, la capote éclairante 1 comporte en outre une pièce couvrante 24 recouvrant la seconde extrémité des fibres optiques diffusantes 4 à partir de la bordure 6. Cette pièce couvrante 24 est cousue sur la bordure 6 afin de protéger les extrémités libres des fibres optiques diffusantes jusqu'au manchon 8.

La figure 2 représente un second mode de réalisation de la capote éclairante 11.

Dans ce mode de réalisation, la capote éclairante 11 comporte deux nappes textiles couvrantes 21 et 22 et une nappe éclairante tissée 3.

La nappe textile couvrante 21 est destinée à être disposée vers l'extérieur de l'habitacle formé par la capote éclairante 11. La nappe textile couvrante 21 est destinée à protéger l'habitacle formé par la capote éclairante 11 des agressions extérieures, par exemple de la pluie.

La nappe textile couvrante 22 est destinée à être disposée vers l'intérieur de l'habitacle formé par la capote éclairante 11. La nappe textile couvrante 22 est destinée à protéger la seconde extrémité des fibres optiques diffusantes 4, au lieu de la pièce couvrante 24 du premier mode de réalisation.

La nappe textile couvrante 21 est cousue tendue sur la nappe textile couvrante 22 de sorte à ce que l'ensemble formé par les deux nappes soit plat. Par exemple, les coutures fixant les deux nappes textiles couvrantes sont réalisées sur les bords des deux nappes textiles couvrantes 21 et 22.

La nappe textile couvrante 22 présente une fenêtre 10 rectangulaire de même dimensions que la nappe éclairante tissée 3 et présente des bordures 12.

Au lieu d'être cousue sur la nappe textile couvrante 21 comme dans le premier mode de réalisation, la nappe tissée éclairante 3 est cousue sur les bordures 12 de la nappe textile couvrante 22. Les bordures 6 et les bordures 12 sont cousues par la couture d'assemblage 9.

Ainsi, aucune couture ne traverse la nappe textile couvrante 21, ce qui améliore la résistance de la capote éclairante 11 vis-à-vis de la pluie, notamment en effectuant une fonction de seconde couverture étanche au-dessus de l'habitacle.

La figure 4 représente un bateau de plaisance 13 sur lequel est installée une capote éclairante 11.

Comme représenté, la capote éclairante 11 est constituée d'un assemblage d'une portion de toit 200 et d'autres portions, à savoir pare-brise 300 et pans latéraux 400, cousues entre elles par leurs bords, ainsi que de fourreaux 25.

La capote éclairante 11 forme un habitacle sur le pont du bateau de plaisance 13. Les arceaux soutenant la capote éclairante 11 sont représentés dans les fourreaux par des lignes en trait interrompus. Cet habitacle est protégé des intempéries, notamment, en mer, grâce à la capote éclairante 11. Notamment, les intempéries dans un environnement marin comportent l'action de vents, de la pluie, des embruns et des vagues les plus fortes s'écrasant sur le pont.

L'habitacle formé est éclairant grâce à la nappe éclairante tissée 3 tournée vers l'intérieur de l'habitacle. La nappe éclairante tissée 3 procure un éclairage d'ambiance à l'intérieur de l'habitacle. Notamment, la nappe éclairante tissée 3 placée au plafond de l'habitacle agit comme un plafonnier en éclairant l'ensemble de l'habitacle vers le sol de l'habitacle.

La nappe éclairante tissée 3 a pour avantage d'agir comme une lampe étendue, donc d'améliorer l'homogénéité de l'éclairage d'ambiance.

De plus, son épaisseur est réduite, et la capote éclairante 11 ne présente pas de surépaisseur significative au niveau de la nappe éclairante tissée 3. Au plus, l'épaisseur de la capote éclairante 11 double au niveau de la nappe éclairante tissée 3. La nappe éclairante tissée 3 étant flexible et mince, la flexibilité de la capote éclairante 11 est maintenue malgré l'intégration d'une lampe dans la capote éclairante 11. L'avantage en résultant est de permettre de rouler ou dérouler la capote éclairante 11. Par exemple, la capote éclairante 11 peut être roulée pour être rangée pendant l'hivernage du bateau de plaisance 13 afin d'augmenter la durée de vie de la capote éclairante 11.

La capote éclairante 11 présente aussi des fenêtres transparentes 14, par exemple réalisées en plastique souple transparent soudé sur des fenêtres découpées dans les nappes textiles 21 et 22. La capote éclairante 11 présente une forme d'auvent.

La figure 7 représente plus en détail le boitier d'éclairage 23. Le boitier d'éclairage 23 comporte un boitier étanche 19 et un dissipateur thermique 20 fixé sur le boitier étanche 19.

Le boitier étanche 19 comporte des orifices. Un des orifices est apte à recevoir un câble alimentation électrique 15 et à le fixer de façon étanche à l'aide d'un presse étoupe 16 et d'un joint annulaire 17. Un autre orifice est apte à recevoir le manchon 8 et à le fixer de façon étanche à l'aide d'un presse étoupe 16 et d'un joint annulaire 17.

Le boitier étanche 19 comporte en outre une Diode Electroluminescente (LED) 18 disposée de sorte à éclairer dans la direction du manchon 8.

A l'intérieur du boitier étanche 19, le câble d'alimentation est connecté électriquement à la LED 18 afin de l'alimenter électriquement.

Le boitier 23 comporte en outre une lentille optique (non représentée) entre la LED 18 et le manchon 8. La lentille optique concentre la lumière émise par la LED 18 sur les secondes extrémités des fibres optiques diffusantes 4 à l'intérieur du manchon 8.

Le dissipateur thermique 20 permet de réguler la température du boitier d'éclairage 23 en dissipant la chaleur émise par la LED 18.

Les articles de couverture peuvent être utilisés dans diverses applications de plein air, par exemple dans le domaine du nautisme pour réaliser des articles de sellerie nautique, en particulier des capotes d'habitacles, des stores, des toits de cockpit, des biminis, des housses de protection extérieures, des bâches, des selleries de cockpit, par exemple des banquettes, des coussins, des bains de soleil, des revêtements de mousse, de consoles ou de bolster, par exemple de siège bolster, des voilesdes housses de grand-voile, de génois, de spi, des tauds de grand-voile, des lazy bag, des tauds de soleil, etc.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, la description détaillée des figures 1 à 3 peut s'appliquer également à un bimini comportant une portion de toit 200 formant non pas un habitacle mais un simple toit au-dessus du pont d'un bateau.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Article de couverture flexible (1, 11) pour usage en plein air, comportant :
- une nappe textile couvrante (2, 22), et
- une nappe éclairante tissée (3) comportant des fibres optiques diffusantes (4) et des fils de liage (5) tissés avec les fibres optiques diffusantes (4), la nappe éclairante comportant en outre une bordure (6) composées de fils textiles tissés, la bordure (6) étant disposée sur le pourtour de la nappe éclairante tissée (3), les fibres optiques diffusantes (4) dépassant d'un bord de la nappe éclairante tissée (3), une portion d'extrémité des fibres optiques diffusantes (4) étant réunie en un toron (7),
- une couture d'assemblage (9), la nappe éclairante tissée (3) étant fixée sur la nappe textile couvrante (2, 22) par la couture d'assemblage (9) sur la bordure (6), les deux nappes étant tendues,
- un boitier d'éclairage (23), le boitier d'éclairage comportant une sortie optique, la sortie optique étant connectée au toron (7) de fibres optiques diffusantes (4), et une source lumineuse (18) pour générer un flux lumineux dans la sortie optique.

2. Article de couverture flexible (1, 11) selon la revendication 1, dans lequel les fibres optiques diffusantes (4) sont parallèles entre elles, de sorte que la nappe éclairante tissée (3) est sensiblement plate.

3. Article de couverture flexible (1, 11) selon la revendication 1 ou 2, comportant en outre un manchon (8), le toron (7) étant assemblé dans le manchon (8) à l'extrémité du toron (7), le manchon (8) étant apte à recevoir le flux lumineux généré dans la sortie optique sur l'extrémité des fibres optiques diffusantes (4).

4. Article de couverture flexible (1, 11) selon l'une des revendications 1 à 3, dans lequel la source lumineuse est une Diode Electroluminescente (LED) et le boitier d'éclairage comporte en outre une lentille apte à focaliser la lumière émise par la LED sur l'extrémité des fibres optiques diffusantes.

5. Article de couverture flexible (1, 11) selon l'une des revendications 1 à 4, dans lequel la nappe textile couvrante (2) est enduite sur une face de sorte à être imperméable, la nappe éclairante tissée (3) étant cousue sur l'autre face.

6. Article de couverture flexible (1, 11) selon la revendication 5, dans lequel l'enduit comporte une résine imperméable.

7. Article de couverture flexible (1, 11) selon l'une des revendications 1 à 6, configuré sous la forme d'une toile de capote éclairante comportant en outre des fourreaux (25) formés le longs des bords de la nappe textile couvrante (2, 22), les fourreaux (25) étant aptes à recevoir des arceaux afin que l'article de couverture flexible (1, 11) forme un habitacle ou un toit.

8. Article de couverture flexible (1, 11) selon l'une quelconque des revendications 1 à 7, dans lequel la nappe textile couvrante est une première nappe textile couvrante (22), l'article de couverture flexible comportant en outre une seconde nappe textile couvrante (21) disposée par-dessus.

9. Article de couverture flexible (1, 11) selon la revendication 8, dans lequel la première nappe textile (22) présente un évidement de même dimension que la nappe éclairante tissée (3) et les bords (12) de cet évidement sont cousus avec les bordures (9) de la nappe éclairante tissée (3) sur la première nappe textile (22).

10. Capote destinée à un usage sur un véhicule marin (13), comportant l'article de couverture flexible (1, 11) selon la revendication 7 et des arceaux disposés au moins en partie dans les fourreaux (25) de l'article de couverture flexible (1, 11), de sorte que l'article de couverture flexible (1, 11) est tendu sur les arceaux, les arceaux étant aptes à être fixés sur le véhicule marin (13).

## Patentansprüche

1. Flexibler Abdeckungsartikel (1, 11) zur Verwendung im Freien, umfassend:
- eine textile Abdecklage (2, 22) und
- eine Leuchtgewebelage (3), die lichtstreuende optische Fasern (4) und mit den lichtstreuenden optischen Fasern (4) verwebte Bindungsfäden (5) umfasst, wobei die Leuchtgewebelage ferner eine Kante (6) aus gewebten Textilfäden aufweist, wobei die Kante (6) am Umfang der Leuchtgewebelage (3) angeordnet ist, wobei die lichtstreuenden optischen Fasern (4) von einem Rand der Leuchtgewebelage (3) abstehen, wobei ein Endabschnitt der lichtstreuenden optischen Fasern (4) mit einer Litze (7) verbunden ist,
- eine Verbindungsnaht (9), wobei die Leuchtgewebelage (3) an der Kante (6) durch die Verbindungsnaht (9) an der textilen Abdecklage (2, 22) befestigt ist, wobei die beiden Lagen gespannt sind,
- ein Lichtgehäuse (23), wobei das Lichtgehäuse einen optischen Ausgang hat und der optische Ausgang mit der Litze (7) aus lichtstreuenden optischen Fasern (4) verbunden ist, und eine Lichtquelle (18) zum Erzeugen eines Lichtstroms in dem optischen Ausgang.

2. Flexibler Abdeckartikel (1, 11) nach Anspruch 1, wobei die lichtstreuenden optischen Fasern (4) parallel zueinander sind, derart, dass die Leuchtgewebelage (3) im Wesentlichen eben ist.

3. Flexibler Abdeckartikel (1, 11) nach Anspruch 1 oder 2, ferner umfassend eine Hülse (8), wobei die Litze (7) an ihrem Ende in der Hülse (8) zusammengefügt ist, wobei die Hülse (8) geeignet ist, den Lichtstrom zu empfangen, der in dem optischen Ausgang am Ende der lichtstreuenden optischen Fasern (4) erzeugt wird.

4. Flexibler Abdeckartikel (1, 11) nach einem der Ansprüche 1 bis 3, wobei die Lichtquelle eine Leuchtdiode (LED) ist und das Lichtgehäuse ferner eine Linse zum Fokussieren des von der LED abgestrahlten Lichts am Ende der lichtstreuenden optischen Fasern aufweist.

5. Flexibler Abdeckartikel (1, 11) nach einem der Ansprüche 1 bis 4, wobei die textile Abdecklage (2) einseitig derart beschichtet ist, dass sie undurchlässig ist, wobei die Leuchtgewebelage (3) auf die andere Seite aufgenäht ist.

6. Flexibler Abdeckartikel (1, 11) nach Anspruch 5, wobei die Beschichtung undurchlässiges Harz umfasst.

7. Flexibler Abdeckartikel (1, 11) nach einem der Ansprüche 1 bis 6, konfiguriert als Leuchtgewebeverdeck, welches ferner Hülsen (25) aufweist, die entlang der Ränder der textilen Abdecklage (2, 22) gebildet sind, wobei die Hülsen (25) für die Aufnahme von Bügeln geeignet sind, so dass der flexible Abdeckartikel (1, 11) einen Innenraum oder ein Dach bildet.

8. Flexibler Abdeckartikel (1, 11) nach einem der Ansprüche 1 bis 7, wobei die textile Abdecklage eine erste textile Abdecklage (22) ist, wobei der flexible Abdeckartikel ferner eine zweite textile Abdecklage (21) umfasst, die darüber angeordnet ist.

9. Flexibler Abdeckartikel (1, 11) nach Anspruch 8, wobei die erste textile Abdecklage (22) eine Aussparung mit den gleichen Dimensionen wie die Leuchtgewebelage (3) aufweist und die Ränder (12) dieser Aussparung auf der ersten Textillage (22) mit den Kanten (9) der Leuchtgewebelage (3) vernäht sind.

10. Verdeck zur Verwendung bei einem Wasserfahrzeug (13), umfassend den flexiblen Abdeckartikel (1, 11) nach Anspruch 7 und Bügel, die zumindest teilweise in den Hülsen (25) des flexiblen Abdeckartikels (7) angeordnet sind, derart, dass der flexible Abdeckartikel (1, 11) auf den Bügeln gespannt wird, wobei die Bügel für eine Befestigung an dem Wasserfahrzeug (13) geeignet sind.

## Claims

1. A flexible coverage-providing article (1, 11) for outside use, comprising:
- a covering textile layer (2, 22), and
- a woven illuminating layer (3) comprising diffusing optical fibers (4) and binding threads (5) woven with the diffusing optical fibers (4), the illuminating layer furthermore comprising a border (6) composed of woven textile threads, the border (6) being placed on the perimeter of the woven illuminating layer (3), the diffusing optical fibers (4) extending beyond one edge of the woven illuminating layer (3), an end segment of the diffusing optical fibers (4) being formed into a strand (7),
- an assembly seam (9), the woven illuminating layer (3) being fastened to the covering textile layer (2, 22) by the assembly seam (9) on the border (6), the two layers being taut,
- a lighting unit (23), the lighting unit comprising an optical output, the optical output being connected to the strand (7) of diffusing optical fibers (4), and a light source (18) for generating a light flux in the optical output.

2. The flexible coverage-providing article (1, 11) as claimed in claim 1, wherein the diffusing optical fibers (4) are parallel to one another, so that the woven illuminating layer (3) is substantially flat.

3. The flexible coverage-providing article (1, 11) as claimed in claim 1 or 2, furthermore comprising a sleeve (8), the strand (7) being assembled in the sleeve (8) at the end of the strand (7), the sleeve (8) being able to receive the light flux generated in the optical output on the end of the diffusing optical fibers (4).

4. The flexible coverage-providing article (1, 11) as claimed in one of claims 1 to 3, wherein the light source is a light-emitting diode (LED) and the lighting unit furthermore comprises a lens able to focus the light emitted by the LED onto the end of the diffusing optical fibers.

5. The flexible coverage-providing article (1, 11) as claimed in one of claims 1 to 4, wherein the covering textile layer (2) is coated on one face so as to be water resistant, the woven illuminating layer (3) being sewn to the other face.

6. The flexible coverage-providing article (1, 11) as claimed in claim 5, wherein the coating comprises a water-resistant resin.

7. The flexible coverage-providing article (1, 11) as claimed in one of claims 1 to 6, configured in the form of an illuminating spray-hood canvas furthermore comprising sheaths (25) formed along the edges of the covering textile layer (2, 22), the sheaths (25) being able to receive poles in order that the flexible coverage-providing article (1, 11) forms a cockpit or a roof.

8. The flexible coverage-providing article (1, 11) as claimed in any one of claims 1 to 7, wherein the covering textile layer is a first covering textile layer (22), the flexible coverage-providing article furthermore comprising a second covering textile layer (21) placed thereabove.

9. The flexible coverage-providing article (1, 11) as claimed in claim 8, wherein the first textile layer (22) contains an aperture of same size as the woven illuminating layer (3) and the edges (12) of this aperture are sewn with the borders (9) of the woven illuminating layer (3) to the first textile layer (22).

10. A spray hood intended for use on a marine vehicle (13), comprising the flexible coverage-providing article (1, 11) as claimed in claim 7 and poles placed at least partially in the sheaths (25) of the flexible coverage-providing article (1, 11), so that the flexible coverage-providing article (1, 11) is taut on the poles, the poles being able to be fastened to the marine vehicle (13).
